# EUROPÄISCHE PATENTSCHRIFT

(11) **EP 3 015 267 B1**
(45) Veröffentlichungstag und Bekanntmachung des Hinweises auf die Patenterteilung: **03.10.2018**
(21) Anmeldenummer: 15179713.1
(22) Anmeldetag: 04.08.2015
(51) Int. Cl.: B41F 33/00, G06K 7/14, G06K 9/03, G06K 9/20, G06K 9/32

(54) **VERFAHREN UND VORRICHTUNG ZUR DETEKTION EINER DRUCKMARKE**
METHOD AND DEVICE FOR DETECTING A PRINTED MARK
PROCÉDÉ ET DISPOSITIF DESTINÉS À LA DÉTECTION D'UNE MARQUE D'IMPRESSION

(30) Priorität: 27.10.2014 AT 507682014
(43) Veröffentlichungstag der Anmeldung: 04.05.2016
(73) Patentinhaber: B&R Industrial Automation GmbH, 5142 Eggelsberg (AT)
(72) Erfinder: Enzinger, Thomas, 4950 Altheim (AT)
(74) Vertreter: Patentanwälte Pinter & Weiss OG

(56) Entgegenhaltungen:
- EP-A1- 1 947 522
- DE-U1-202011 050 286
- US-A- 4 142 105
- US-A- 5 952 644
- US-A- 6 000 616

## Beschreibung

Die Erfindung betrifft ein Verfahren zur Detektion von Druckmarken durch Auswertung eines zyklischen Sensorsignals von zumindest einem Kontrastsensor, der den die Druckmarke enthaltenden Bereich von Druckmaterial, das unter dem Kontrastsensor hindurchgeführt wird, abtastet. Die Erfindung betrifft weiters eine Vorrichtung zur Detektion von Druckmarken mit einer Sensoranordnung und einer Signalaufbereitungseinheit, wobei die Sensoranordnung zumindest einen Kontrastsensor aufweist, der zur Erzeugung eines zyklischen Sensorsignals über dem die Druckmarke enthaltenden Bereich von Druckmaterial, das unter dem Kontrastsensor hindurchgeführt wird, angeordnet ist.

Druckmarken werden nicht nur in der Druckindustrie, sondern auch in vielen anderen Bereichen der verarbeitenden Industrie verwendet, etwa um die Ausrichtung von Verpackungsmaterial in Verpackungsmaschinen zu kontrollieren und etwaige Abweichungen zu erkennen und auszugleichen. Bei Druckmaschinen, etwa Rotations- oder Offsetdruckmaschinen für den Bogen- oder Rollendruck, werden Druckmarken üblicher Weise verwendet, um die unterschiedlichen aufzubringenden Druckfarben exakt aufeinander abzustimmen. Geringfügige Abweichungen der Druckmarkenpositionen werden beim Aufbringen der nächsten Druckfarbe von der jeweiligen Druckmaschine automatisch ausgeglichen. Druckmarken werden dabei mit sogenannten Kontrastsensoren erkannt. Diese Kontrastsensoren erzeugen mithilfe eines lichtempfindlichen Bauteils ein Analogsignal, dessen Stärke dem Farbverlauf der Druckmarke entspricht. Mithilfe einer programmierbaren Schaltschwelle wird ein Ausgangssignal generiert, aus dem der Start- bzw. Endzeitpunkt der Druckmarke abgeleitet werden kann. Über die ermittelten Zeitpunkte und die aktuelle Relativgeschwindigkeit zwischen Kontrastsensor und Druckmarke kann die Position bzw. die Breite der Marke berechnet werden. Diese Werte werden den Verarbeitungs- bzw. Druckmaschinen für die Positionsangleichung bereitgestellt.

Durch spezielle Formen der Druckmarke, beispielsweise als Keil- oder Doppelkeil-Druckmarken, lässt sich nicht nur der Versatz in Vorschubrichtung, sondern auch der seitliche Versatz des Druckmaterials durch Auswertung eines einzigen Sensorsignals eines Kontrastsensors ermitteln.

Um das Sensorsignal eines Kontrastsensors sicher auswerten zu können, muss dieser, bzw. die Einheit, die dessen Sensorsignal zur Erzeugung des Druckmarkensignals auswertet, kalibriert werden, wobei insbesondere die Schaltschwelle an die jeweiligen Umgebungsbedingungen, den Kontrast und die Qualität der Druckmarke und an den jeweils verwendeten Kontrastsensor angepasst werden muss, um die Druckmarken klar detektieren zu können. Zusätzlich muss beim Hochfahren der Druck-, Verpackungs- oder sonstigen Maschine anfänglich eine Parametrisierung vorgenommen werden. Dabei wird üblicher Weise ein Messfenster in dem zyklischen Signalverlauf definiert, in dem die Druckmarke detektiert werden soll. Eine fehlerhafte Kalibrierung und/oder eine unpassende Parametrisierung können dabei erhebliche Kosten verursachen, wenn die Fehler zu spät erkannt werden.

Verständlicher Weise nehmen die Probleme, die bei der Druckmarkendetektion und bei der Auswertung des Sensorsignals Auftreten, mit zunehmender Vorschubgeschwindigkeit des Druckmaterials zu.

Als "Druckmaterial" wird im Zusammenhang mit der gegenständlichen Erfindung ein Material bezeichnet, auf dem sich eine zu detektierende Druckmarke befindet, unabhängig davon, ob das Druckmaterial in der jeweiligen Anwendung bedruckt wird, oder ob es auf eine andere Weise verwendet wird, etwa bei Verpackungsmaterial, das einer Verpackungsmaschine zugeführt wird.

Als "Parametrisierung" werden im Zusammenhang mit der gegenständlichen Beschreibung alle Parameteränderungen bezeichnet, die üblicher Weise unmittelbar vor und während des Hochfahrens einer Maschine in Bezug auf die Druckmarkenerkennung vorgenommen werden, insbesondere die Einstellung des Messfensters. Als "Kalibrierung" werden im Zusammenhang mit der gegenständlichen Beschreibung alle anderen Parameter- und Einstellungsänderungen bezeichnet, die vorgenommen werden müssen, um mit einer vorgegebenen Anlage eine Druckmarkenerkennung möglich zu machen.

Als "Signal" oder "Sensorsignal" wird im Zusammenhang mit der gegenständlichen Beschreibung ein von einem Kontrastsensor erzeugtes analoges oder digitales Signal oder ein für ein solches Signal repräsentatives analoges oder digitales Signal bezeichnet.

Einige Probleme, die im Stand der Technik bei der Druckmarkenerkennung auftreten, sind im Folgenden kurz zusammengefasst:
- Für jede neue Kombination aus Druckmarke und Kontrastsensor muss die Schaltschwelle für die Detektion einer Druckmarke neu ermittelt, d.h. eine neuerliche Kalibrierung durchgeführt werden.
- Bei Signalveränderungen kann es bei einer statischen Schaltschwelle zu Fehlmessungen kommen.
- Verrauschte Sensorsignale wirken sich stark auf das Ergebnis aus.
- Bei schwachen Druckmarken mit geringem Rauschabstand ist keine robuste Messung mehr möglich.
- Fremdlicht-, Temperatur- und/oder Vibrationseinflüsse können das Ergebnis verändern.
- Veränderungen der Druckmarkenintensität beeinflussen das Ergebnis.
- Die derzeitig genutzten Verfahren unterstützen keine Möglichkeit, die Qualität, insbesondere die geometrische Qualität einer Druckmarke zu erfassen.

Wenn eine Druck- bzw. Verpackungsmaschine einmal angelaufen ist, kann eine Veränderung der Verhältnisse dazu führen, dass die anfangs richtig detektierten Druckmarken plötzlich nicht mehr richtig erkannt werden, und die Maschine deswegen über längere Zeit unbemerkt Ausschuss produziert. Es wäre wünschenswert, solche Fehler frühzeitig bemerken zu können, noch bevor der Fehler sich auf die Produktionsqualität auswirkt.

DE 202011050286 U1 offenbart eine Druckmaschine mit einem farbsensitiven Registermarkensensor zur Ermittlung eine für Keilmarken repräsentativen Signals. Zusätzlich zur Kontrolle der Längs- und Seitenregister wird die Farbsensitivität der Sensoren zur Überprüfung der Farbqualität genutzt.

US 6,000,616 offenbart ein Verfahren zur Auswertung eines Sensorsignals eines Barcodelesers, wobei eine Ableitung des Signals gebildet und ausgewertet wird.

Die gegenständliche Erfindung zielt darauf ab, die oben angeführten, sowie weitere Nachteile des Standes der Technik zu überwinden. Insbesondere soll die Zeit für eine zuverlässige Kalibrierung und/oder Parametrisierung verringert werden, wobei etwaige Kalibrierungs- und/oder Parametrisierungsfehler schnell und unmittelbar erkannt werden sollen. Dabei soll die Erfindung eine zuverlässige Druckmarkenerkennung auch bei einer neuen Kombination aus Kontrastsensor und Druckmarke ermöglichen, ohne dass zuvor eine neue Schaltschwelle ermittelt werden muss. Weiters soll erfindungsgemäß die Qualität einer Druckmarke ermittelt und bewertet werden können, um etwaige Veränderungen, die zu einer fehlerhaften Druckmarkenauswertung führen können, frühzeitig erkennen und eliminieren zu können.

Erfindungsgemäß werden diese und andere Ziele durch ein Verfahren gelöst, welches die folgenden Schritte aufweist: Bilden einer ersten Ableitung des Sensorsignals; Ermitteln eines ersten Flankenbereichs in einem Bereich, wo die erste Ableitung einen unteren Schwellenwert unterschreitet; Ermitteln eines zweiten Flankenbereichs in einem Bereich, wo die erste Ableitung einen oberen Schwellenwert überschreitet; Ermitteln von Kennwerten für den ersten Flankenbereich und den zweiten Flankenbereich; Zuordnen einer Druckmarkendetektion zwischen dem ersten Flankenbereich und dem zweiten Flankenbereich auf Basis von ermittelten Kennwerten; und Erzeugen von zumindest einem für die Druckmarken repräsentativen Ausgabewert auf Basis der Druckmarkendetektion. Das Verfahren ermöglicht die Detektion von Druckmarken auf Basis einer geometrischen Analyse des Sensorsignals, ohne dass zuvor eine auf die Art der Druckmarke und den verwendeten Kontrastsensors abgestimmte Schaltschwelle definiert werden muss.

Als der "unterer" Schwellenwert für die erste Ableitung wird im Sinne der gegenständlichen Erfindung der Schwellenwert angesehen, der in der Richtung einer Änderung des Sensorsignals angeordnet ist, die den Übergang von einem Bereich ohne Druckmarke in den Bereich einer Druckmarke kennzeichnet. Üblicher Weise, ohne die Erfindung darauf einzuschränken, ist dieser Übergang ein Übergang von einem hellen zu einem dunklen Bereich. Wenn die Steigung der ersten Flanke eines Druckmarkensignals negativ ist, dann entspricht der untere Schwellenwert für die erste Ableitung einem negativen Wert, wenn die Steigung der ersten Flanke positiv ist, dann entspricht der untere Schwellenwert einem positiven Wert.

In einer vorteilhaften Ausführungsform können der untere Schwellenwert und/oder der obere Schwellenwert dynamische Schwellenwerte sein, die auf Basis der ersten Ableitung ermittelt werden. Die dynamischen unteren und oberen Schwellwerte können dabei jeweils aus dem Maximum der ersten Ableitung berechnet werden. Damit passen sich diese Schwellwerte ständig der Signalform bzw. Steigung der Signalflanken an. Der Benutzer kann mithilfe eines Parameters die beiden Schwellwerte relativ zum Maximum der ersten Ableitung einstellen. Dieser Parameter ist üblicherweise auf ca. 10% eingestellt, d.h. der "obere" bzw. "untere" Schwellenwert entspricht 10% vom negativen bzw. positiven Maximum der ersten Ableitung. Mithilfe dieses Parameters wird die Detektionsempfindlichkeit eingestellt. Dieses Verfahren hat sich bei Versuchen als außerordentlich stabil erwiesen, sodass für die meisten Anwendungen dieser Prozentfaktor nicht angepasst werden muss.

Der charakteristische Verlauf eines Sensorsignals, der bei der Detektion einer Druckmarke üblicherweise ausgewertet wird, weist im Bereich der Druckmarke eine erste Flanke am Beginn der Druckmarke, einen im Wesentlichen linearen Verlauf im Bereich der Druckmarke und eine zweite Flanke am Ende der Druckmarke auf. Ein solcher charakteristischer Verlauf lässt jedoch nicht zwangsläufig auf das tatsächliche Vorhandensein einer Druckmarke schließen, sondern er kann auch bei Signalfehlern oder bei Störmarken auftreten.

Als "Druckmarkendetektion" wird im Zusammenhang mit der gegenständlichen Beschreibung die Feststellung bezeichnet, dass ein für eine Druckmarke charakteristischer Verlauf tatsächlich eine Druckmarke repräsentiert.

Als "Störmarke" wird im Zusammenhang mit der gegenständlichen Offenbarung eine Fehlerquelle angesehen, die einen Verlauf des Sensorsignals bewirkt, der zu einer fehlerhaften Druckmarkendetektion führen kann. Zu Fehlerquellen können Materialübergänge, Schnittkanten, Verschmutzungen, Fehldrucke oder ähnliches zählen.

Als Kennwerte können beispielsweise die Schnittpunkte zwischen der ersten Ableitung und den oberen und unteren Schwellenwerten ermittelt werden. Gegebenenfalls können auch Kennwerte für die zeitliche Dauer der Über- bzw. Unterschreitung der Schwellenwerte und/oder für den Abstand zwischen erstem und zweitem Flankenbereich ermittelt werden.

Die Detektion einer Druckmarke kann dabei von Eigenschaften bestimmter Kennwerte abhängig gemacht werden.

In vorteilhafter Weise kann das erfindungsgemäße Verfahren weiters die folgenden Schritte aufweisen: Bilden einer zweiten Ableitung des Sensorsignals; Ermitteln des Nulldurchgangs der zweiten Ableitung des Sensorsignals im ersten Flankenbereich; Ermitteln des Nulldurchgangs der zweiten Ableitung des Sensorsignals im zweiten Flankenbereich; Zuordnen einer Druckmarkendetektion zwischen dem ersten Nulldurchgang und dem zweiten Nulldurchgang. Dies erlaubt eine einfache und exakte Ermittlung der Druckmarkengrenzen unter Verwendung einfacher Signalfilter.

In einer bevorzugten Ausführungsform des erfindungsgemäßen Verfahrens kann der zumindest eine für die Druckmarken repräsentative Ausgabewert ausgewählt sein aus einer Druckmarkenposition, einer Druckmarkenbreite, einem Druckmarken-Kontrastwert, und/oder einem Qualitätswert, insbesondere einem Wert für die Basisqualität und/oder einem Wert für die Symmetriequalität und/oder einem kombinierten Qualitätswert. Durch Auswahl einer für den jeweiligen Anwendungsfall passenden Kombination an Ausgabewerten kann die Erfindung an vielfältige Einsatzbedingungen angepasst werden.

In vorteilhafter Weise kann die Auswertung des zyklischen Sensorsignals in einem vorzugsweise von einem Benutzer definierten Messfenster erfolgen. Das Messfenster kann beispielsweise auf Basis einer Benutzerauswahl definiert werden. Bereiche außerhalb des Messfensters werden bei der Signalauswertung nicht berücksichtigt, sodass durch die passende Auswahl des Messfensters Bereiche mit Störmarken von der Auswertung ausgeschlossen werden können.

Erfindungsgemäß kann das Messfenster in einer vorteilhaften Ausführungsform durch Auswertung von zumindest einem ersten Zyklus des zyklischen Sensorsignals ermittelt werden. Dabei kann zum Beispiel beim Anfahren der Maschine das zyklische Sensorsignal auf einer Benutzerschnittstelle dargestellt werden, wobei der Benutzer unmittelbar einen Eindruck von der Qualität des gemessenen Sensorsignals erhält, und den Bereich des Sensorsignals (d. h. das Messfenster) auswählen kann, in dem die Druckmarke detektiert werden soll. Diese Vorgehensweise erlaubt eine sehr schnelle, einfache und intuitive Parametrisierung, wobei die gegebenenfalls während des Anfahrens der Maschine anfallende Ausschussproduktion minimiert werden kann.

Die exakte Größe und/oder Position des Messfensters kann erfindungsgemäße automatisch an ein detektiertes Druckmarkensignal angepasst werden, wobei entweder der gesamte Verlauf des zyklischen Sensorsignals berücksichtigt wird, oder das vom Benutzer definierte Messfenster auf Basis des Druckmarkensignals hinsichtlich seiner Position und/oder Länge angepasst wird.

In einer vorteilhaften Ausführungsform kann die für eine Digitalisierung des Sensorsignals verwendete Abtastrate mit der Geschwindigkeit des Druckmaterials synchronisiert werden. Dadurch ist die Anzahl an Messpunkten eines Messfensters (bzw. einer Druckmarke) bei jedem Zyklus identisch, da jeder Digitalisierungsschritt einer bestimmten Längeneinheit entspricht. Für die Signalauswertung können dann einfache und schnelle 1D-Signalfilter verwendet werden.

Als "Filter" wird im Zusammenhang mit der gegenständlichen Offenbarung jegliche Vorrichtung angesehen, die ein (oder mehrere) Eingangssignal(e) auf Basis eines Algorithmus in ein (oder mehrere) Ausgangssignal(e) umwandelt.

Als 1-D-Signalfilter werden Filter bezeichnet, deren Ausgangssignal(e) auf Basis eines einzigen Eingangssignals ermittelt wird (werden). Bezogen auf die gegenständliche Erfindung bedeutet das, dass 1D-Filter die Beschleunigung und Geschwindigkeit des Druckmaterials nicht berücksichtigen müssen, da jeder Schritt zwischen zwei Signalwerten immer der selben Wegstrecke entspricht und somit nicht mehr umgerechnet werden muss. Diese konstante Wegdistanz der Druckmarke zwischen zwei Digitalisierungsschritten wird auch als Messauflösung bezeichnet.

Ein weiteres Problem, das durch die wegdiskreten Digitalisierungsschritte gelöst wird, ist die Zeitverzögerung, die bei der Verwendung von Mittelwertfiltern während der Beschleunigung, also insbesondere beim Anfahren der Maschine, auftritt. Bei einem mit konstanten Zeitschritten zeitdiskret digitalisierten Sensorsignal sind komplexe Berechnungen erforderlich, um die Auswirkungen der Beschleunigung aus dem Sensorsignal herausrechnen bzw. kompensieren zu können. Durch eine Wegdiskrete Abtastungsrate entspricht die Länge jeder Druckmarke der gleichen Anzahl an Zeitschritten bzw. Messpunkten, unabhängig von der Geschwindigkeit. Als "Geschwindigkeit der Druckmarke" wird jeweils die Relativgeschwindigkeit der Druckmarke in Bezug auf den Kontrastsensor bezeichnet.

Die Messauflösung kann in vorteilhafter Weise in einem Bereich zwischen 2 und 100 µm, vorzugsweise in einem Bereich von etwa 3 - 4 µm liegen. Dieser Bereich erlaubt eine sichere Detektierung üblicher Druckmarken auch bei hohen Vorschubgeschwindigkeiten.

In einer vorteilhaften Ausführungsform des gegenständlichen Verfahrens kann für die Druckmarkendetektion zumindest ein Qualitätswert, vorzugsweise ein Wert für die Basisqualität und/oder ein Wert für die Symmetriequalität, ermittelt werden. Solche Qualitätswerte, die mithilfe der erfindungsgemäß verwendeten Filter einfach zu ermitteln sind, erlauben eine kontinuierliche Überwachung der Druckmarkendetektion. Eine Veränderung der Qualitätswerte kann frühzeitig auf Fehlerquellen hinweisen, sodass eine Fehlerbehebung möglich ist, noch bevor die Fehler zu produziertem Ausschuss führen. Bei der Kalibrierung können die Qualitätswerte verwendet werden, um etwa eine fehlerhafte Auswahl des Messfensters schnell zu bemerken, etwa wenn das Messfenster nicht bei der Druckmarke, sondern versehentlich bei einer Störmarke definiert wurde.

Um aus der Position bzw. Breite einer Druckmarke ein für eine Registerregelung verwendbares Ergebnis zu generieren, kann entweder ein absolutes oder eine relatives Messverfahren verwendet werden. Bei der absoluten Messung wird ein einzelner Kontrastsensor verwendet und als Ergebnis wird die Positionsdifferenz zwischen einem für die Druckmarke repräsentativen Ausgabewert und einem virtuellen Offset gebildet. Dabei können sich mechanische, thermische und andere systemische Fehler verhältnismäßig stark auf das Messergebnis auswirken. Bei einer relativen Messung hingegen werden zwei Kontrastsensoren verwendet, die mechanisch fest miteinander verbunden sind, wobei der Abstand zwischen den beiden Kontrastsensoren dem Abstand der Druckmarken entspricht. Als Ergebnis wird die Positionsdifferenz der beiden Marken gebildet. Der Vorteil dabei liegt darin, dass unterschiedliche Störgrößen sich meist auf beide Messzweige gleich stark auswirken und durch die Differenzbildung eliminiert werden. Damit ist eine wesentlich höhere Genauigkeit zu erzielen.

In einer bevorzugten Ausführungsform kann daher ein Differenzwert zwischen einem aus dem Sensorsignal eines ersten Kontrastsensors ermittelten, für eine erste Druckmarke repräsentativen Ausgabewert und einem aus dem Sensorsignal eines zweiten Kontrastsensors ermittelten, für eine zweite Druckmarke repräsentativen Ausgabewert gebildet werden.

Die Erfindung betrifft weiters eine eingangs genannte Vorrichtung zur Detektion von Druckmarken gemäß Anspruch 11, deren Signalaufbereitungseinheit zumindest eine Filtereinheit mit einem ersten Filter zur Ermittlung der ersten Ableitung des Sensorsignals aufweist, wobei die Filtereinheit auf Basis einer Auswertung von zumindest der ersten Ableitung des Sensorsignals zumindest einen für Druckmarken repräsentativen Ausgabewert erzeugt. Mithilfe einer solchen Vorrichtung lässt sich das erfindungsgemäße Verfahren in die Praxis umsetzen.

In vorteilhafter Weise kann die Filtereinheit weiters einen zweiten Filter zur Ermittlung der zweiten Ableitung des Sensorsignals aufweisen, wobei die Filtereinheit auf Basis einer Auswertung der ersten und zweiten Ableitungen des Sensorsignals den für Druckmarken repräsentativen Ausgabewert erzeugt.

In einer bevorzugten Ausführungsform kann die Signalaufbereitungseinheit eine zentrale Recheneinheit aufweisen, die eine auf die Geschwindigkeit des Druckmaterials abgestimmte Abtastrate ermittelt und diese Abtastrate einem Analog-Digital-Umsetzer für das Sensorsignal vorgibt. Dadurch wird die Abtastrate an die jeweilige Geschwindigkeit der Anlage angepasst, was die Auswertung erleichtert und beschleunigt.

Für die Bildung der Ableitungen, die Signalglättung, die Signalauswertung und/oder die Berechnung der Qualitätswerte können einfache, kostengünstige und schnell arbeitende Filter verwendet werden, wobei in vorteilhafter Weise die von der Filtereinheit verwendeten Filter 1D-Filter sind.

In einer weiteren vorteilhaften Ausführungsform kann die Sensoranordnung zwei in Vorschubrichtung des Druckmaterials hintereinander angeordnete Kontrastsensoren aufweisen. Dadurch ist die Kontrastmessung weniger Störungsanfällig.

Bevorzugter Weise kann der von der Filtereinheit ausgewertete Bereich des zyklischen Sensorsignals auf ein Messfenster begrenzbar sein. Dadurch werden Störmarken, die außerhalb des Messfensters liegen, nicht berücksichtigt. Diese Begrenzung kann beispielsweise über eine Benutzerschnittstelle vom Benutzer ausgewählt werden. Das Sensorsignal kann in der Benutzerschnittstelle anwendernah dargestellt werden, sodass z.B. die Auswahl eines Messfensters durch Markieren mit einer Maus oder über einen Touchscreen schnell und einfach durchgeführt werden kann.

Gemäß einer weiteren bevorzugten Ausführungsform kann die erfindungsgemäße Vorrichtung eine Vielzahl an gleichartigen Filtereinheiten aufweisen. Jede der Filtereinheiten stellt eine eigene Hardwareeinheit dar und kann unabhängig von den anderen Einheiten konfiguriert und parametrisiert werden. Dabei können die von jeder Filtereinheit anzuwendenden Filter, die Signaleingänge der Filtereinheit und/oder die Ausgabewerte der Filtereinheit je nach Anwendungsfall und Bedarf vorgegeben und konfiguriert werden. Die von jeder Filtereinheit ausgegebenen Ausgabewerte können beispielsweise über ein Industrienetzwerk an die Benutzerschnittstelle oder an eine Regeleinheit weitergeleitet werden.

Mithilfe der erfindungsgemäßen Vorrichtung kann auch bei verrauschten Sensorsignalen oder bei Druckmarken schlechter Qualität ein Druckmarkensignal erzeugt werden, das die Position der Druckmarken zuverlässig darstellt.

Die gegenständliche Erfindung wird nachfolgend unter Bezugnahme auf die Figuren 1 bis 5 näher erläutert, die beispielhaft, schematisch und nicht einschränkend vorteilhafte Ausgestaltungen der Erfindung zeigen. Dabei zeigen
Fig.1 ein Diagramm des Verlaufs eines Sensorsignals eines Kontrastsensors zur Erkennung einer Druckmarke mit einem vorgegebenen Schwellenwert gemäß dem Stand der Technik;
Fig. 2 ein Diagramm eines Sensorsignals mit den entsprechenden ersten und zweiten Ableitungen zur Erläuterung des erfindungsgemäßen Verfahrens;
Fig. 3a bis 3c eine Gegenüberstellung mehrerer Sensorsignalverläufe mit unterschiedlichen Qualitätswerten;
Fig. 4a ein Diagramm eines im Messfenster zentrierten Druckmarkensignals;
Fig. 4b ein Diagramm eines nicht zentrierten Druckmarkensignals;
Fig. 4c ein Diagramm eines Signals, das von einer Störmarke erzeugt wurde; und
Fig. 5 eine schematische Darstellung einer beispielhaften Ausführungsform der erfindungsgemäßen Vorrichtung.

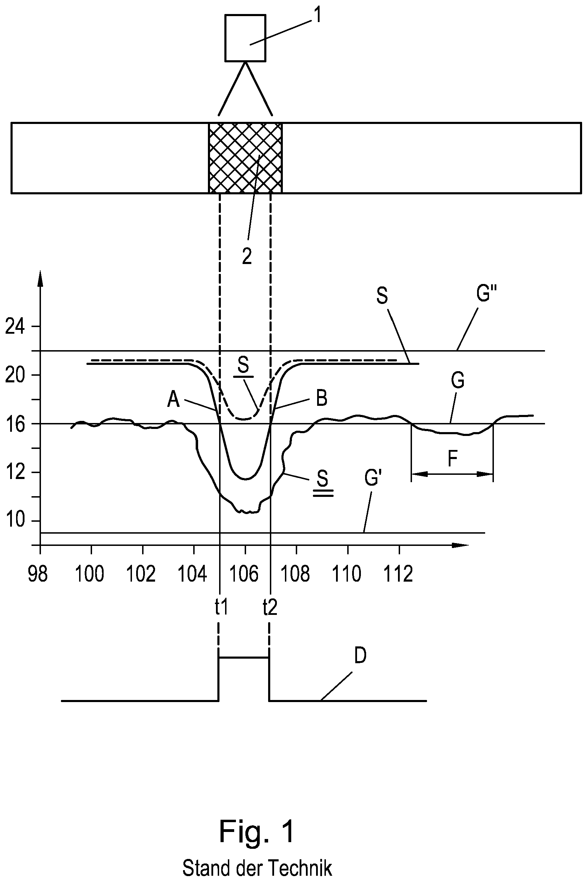

Fig. 1 zeigt ein Diagramm eines typischen Sensorsignals S eines Kontrastsensors 1, das beim Scannen einer Druckmarke 2 entsteht. Wenn die Druckmarke 2 den Kontrastsensor 1 passiert, sinkt die vom Kontrastsensor 1 gemessene Helligkeit stark ab und steigt wieder auf den ursprünglichen Wert an, wenn die Druckmarke 2 den Bereich des Kontrastsensors 1 verlassen hat. Gemäß den herkömmlichen Verfahren wird für die Detektion einer Druckmarke 2 eine Schaltschwelle G für das Sensorsignal S festgelegt, und es wird eine Druckmarke 2 erkannt, wenn das Sensorsignal S für eine Dauer, die etwa der Länge (in Vorschubrichtung) der Druckmarke 2 entspricht, unter diese Schaltschwelle G absinkt. In dem Beispiel der Fig. 1 wird die Schaltschwelle G von dem Sensorsignal S zwischen den Punkten t1 und t2 unterschritten, wobei ein digitales Druckmarkensignal D erzeugt wird, das für die Druckmarke 2 repräsentativ ist, und als Basis für die Regelung der nachgelagerten Vorrichtung der Maschine dient. Zum Beispiel kann auf Basis des Druckmarkensignals D der Druck einer weiteren Farbe exakt auf die bereits aufgedruckte(n) Farbe(n) ausgerichtet werden. In anderen Anwendungsgebieten kann das Druckmarkensignal D dafür verwendet werden, um zum Beispiel Verpackungsmaterial auszurichten, an den zum Aufdruck passenden Stellen zu schneiden, zu verschweißen und/oder zu falzen, wobei die gegenständliche Erfindung auf alle Arten der Anwendung von Druckmarken vorteilhaft anwendbar ist.

Das Ausmaß der tatsächlichen Absenkung des Sensorsignals S hängt von vielen Faktoren ab, unter anderem von der Bauart und der Sensitivität des Kontrastsensors, von der Relativgeschwindigkeit zwischen Druckmarke 2 und Kontrastsensor 1, von den Umgebungsbedingungen, dem Druckmaterial, und von der Art und der Beschaffenheit der Druckmarke 2 selbst. Bei geänderten Umgebungsbedingungen, z.B. wenn der Kontrastsensor 1 ausgetauscht wurde, sich die Position oder Art der Druckmarken geändert haben, oder wenn sich die Beleuchtungssituation geändert hat, kann die in Fig. 1 dargestellte Art der Druckmarkendetektion des Standes der Technik, die auf einem festgelegten Schaltschwelle G basiert, fehleranfällig sein.

Beispielsweise kann es im Falle einer kontrastarmen Druckmarke 2 vorkommen, dass das Sensorsignal S nicht lange genug oder gar nicht unter die Schaltschwelle G absinkt, um diese Druckmarke 2 zuverlässig erkennen zu können. Ein solches Sensorsignal einer schwachen Druckmarke 2 ist in Fig. 1 als Sensorsignal S beispielhaft dargestellt.

Ein ähnliches Problem kann auftreten, wenn die Schaltschwelle zu niedrig oder zu hoch gewählt wird. Im ersten Fall einer zu niedrig gewählten Schaltschwelle G' fällt das Sensorsignal S auch im Bereich der Druckmarke 2 nicht unter die Schaltschwelle G' ab, und im zweiten Fall der zu hoch gewählten Schaltschwelle G" würde das Sensorsignal S ständig unterhalb der Schaltschwelle G" bleiben, und daher kein verwendbares Ergebnis liefern.

Ein weiteres mögliches Problem kann bei verrauschten oder welligen Sensorsignalen auftreten, wie dies bei dem Sensorsignal S beispielhaft dargestellt ist. Mit der Schaltschwelle G kann zwar die Druckmarke 2 richtig erkannt werden, da das Sensorsignal S ausreichend lange unter die Schaltschwelle G abfällt, allerdings fällt das Sensorsignal S auch in einem anderen Bereich F ausreichend lange unter die Schaltschwelle G, sodass auch dort eine Druckmarke detektiert würde, die jedoch gar nicht vorhanden ist (es handelt sich also um eine Störmarke). Solche Störmarken können nicht nur bei einer ungeeigneten Wahl der Schaltschwelle auftreten, sondern auch aufgrund anderer Störeinflüsse, wie etwa Verschmutzungen oder störender Lichteinflüsse entstehen.

In jedem dieser Fälle muss eine Vorrichtung gemäß dem Stand der Technik neu kalibriert und eine passende neue Schaltschwelle ermittelt und eingestellt werden. Auch nach einem Austausch des Kontrastsensors 1 ist eine neuerliche Kalibrierung erforderlich. Zur Kalibrierung reicht es zwar mitunter aus, die Schaltschwelle neu einzustellen, dies ist jedoch mitunter schwierig und zeitaufwändig, und kann nicht während der Laufzeit der Maschine durchgeführt werden, sodass dabei hohe Kosten entstehen können. Auch wird die Kalibrierung meist nicht von einem Fachpersonal für die Sensortechnik durchgeführt, sondern von dem Bediener der jeweiligen Druck- oder Verarbeitungsmaschine, für den die Lösung von sensorspezifischen Problemen einen zusätzlichen und unerwünschten Aufwand bedeutet.

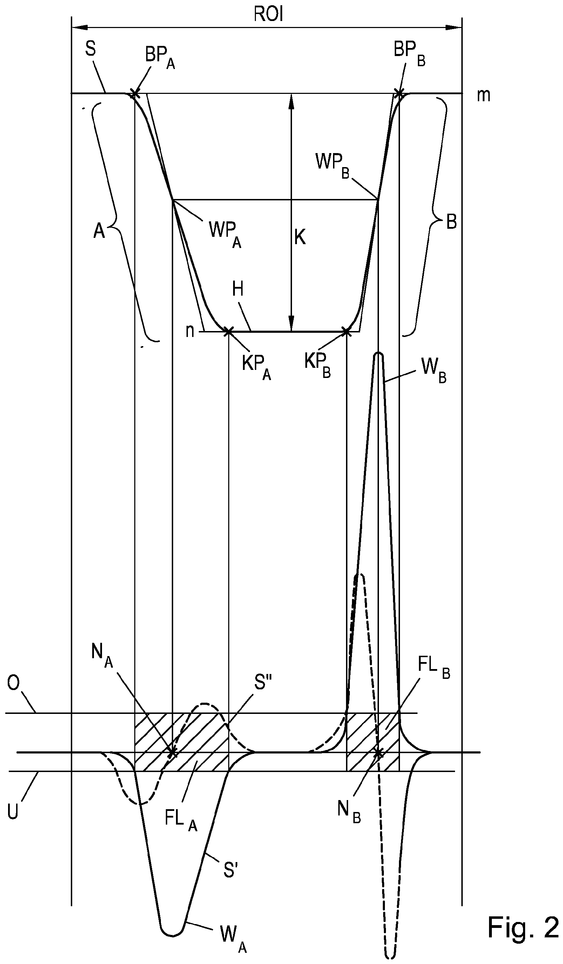

Die erfindungsgemäßen Verfahren und Vorrichtungen haben das Ziel, die Kalibrierung so stark zu vereinfachen, dass sie von einer Bedienperson schnell, einfach und gegebenenfalls sogar bei arbeitender Maschine durchgeführt werden kann. Der erfindungsgemäßen Lösung liegt die Idee zugrunde, für die Auswertung des Sensorsignals S nicht die absoluten Werte zu verwenden, sondern die Werte der ersten bzw. zweiten Ableitungen S', S" des Sensorsignals S. Anhand Fig. 2 wird das erfindungsgemäße Verfahren zur Auswertung eines analogen Sensorsignals S für die Ermittlung von Druckmarken erläutert. Ausgehend von einem oberen Ausgangswert m fällt das Sensorsignal S über eine erste Flanke A auf einen unteren Wert n ab, wenn der Kontrastsensor 1 die Grenze zwischen dem hellen Bereich außerhalb der Druckmarke 2 und dem dunkleren Bereich innerhalb der Druckmarke 2 überschreitet.

Für das erfindungsgemäße Verfahren ist keine vordefinierte Schaltschwelle erforderlich, sondern es werden die geometrischen Eigenschaften des Sensorsignals S ausgewertet. Dazu werden, zum Beispiel mithilfe von an sich bekannten Signalfiltern, eine erste Ableitung S' und eine zweite Ableitung S" gebildet. Die abfallenden Flanke A lässt sich durch eine ausgeprägte negative Wertspitze W_{A} der ersten Ableitung S' erkennen, wohingegen die zweite, ansteigende Flanke B eine positive Wertspitze W_{B} in der ersten Ableitung S' bewirkt.

Um die Grenzen der Druckmarke 2 möglichst genau erkennen zu können, sind ein unterer Schwellenwert U und ein oberer Schwellenwert O für die erste Ableitung S' definiert, wobei die Schwellenwerte U, O jeweils einer bestimmten (positiven bzw. negativen) Steigung des Sensorsignals entsprechen. Im Unterschied zu der Schaltschwelle des Standes der Technik sind diese Schwellenwerte U, O von der (absoluten) Signalstärke unabhängig, da sie nur die geometrischen Eigenschaften des Sensorsignals S wiederspiegeln. Für die Schwellenwerte U, O kann ein vom Anbieter vorab durch Versuche ermittelter, voreingestellter Wert verwendet werden, vorzugsweise können die Schwellenwerte U, O auf Basis des Sensorsignals dynamisch ermittelt werden, beispielsweise als Prozentwert des Maximums bzw. Minimums der ersten Ableitung S' des Sensorsignals S. Dadurch wird es nur in speziellen Fällen erforderlich sein wird, diese Schwellenwerte U, O nachträglich zu justieren. Bei einem stark verrauschten Sensorsignal könnten die Schwellenwerte U, O beispielsweise einen größeren Abstand aufweisen, wohingegen sie bei einem sehr glatten und ungestörten Verlauf des Sensorsignals sehr eng gesetzt werden können. Weiters kann auch eine Glättung des Sensorsignals und/oder der ersten Ableitung S' und/oder der zweiten Ableitung S" erfolgen, bevor diese Signale zum Detektieren von Druckmarken ausgewertet werden. Eine Glättung des Sensorsignals stellt sicher, dass nur ausreichend stark ausgeprägte Flanken dazu führen, dass die ersten Ableitung S' ausreichend lange den unteren Schwellenwert U unterschreitet bzw. den oberen Schwellenwert O überschreitet, um eine Druckmarkendetektion auszulösen.

Zur Auswertung des Sensorsignals werden die charakteristischen Formen der ersten Ableitung S' des Sensorsignals herangezogen, wobei insbesondere eine negative Wertspitze gefolgt von einer positiven Wertspitze für eine Druckmarke 2 kennzeichnend ist (üblicher Weise kann als "negativ" die Flankenrichtung zu einer geringeren Leuchtdichte hin angesehen werden, es ist jedoch auch der umgekehrte Fall denkbar, etwa wenn ein dunkles Material verarbeitet wird, auf dem zur besseren Erkennung eine helle Druckmarke aufgebracht ist). Der Unterschied zwischen den oberen und unteren Schwellenwerten für die erste Ableitung S' des Sensorsignals S, und den Schaltschwellen für das Sensorsignal S, wie sie im Stand der Technik definiert werden, liegt nun vor allem darin, dass das Auftreten einer Druckmarke 2 erfindungsgemäß auf Basis der Steilheit und der Länge der Flanken A, B und nicht durch die (absolute) Auslenkung des Sensorsignals selbst ermittelt wird.

Der Bereich, in dem die erste Ableitung S' den unteren Schwellenwert U unterschreitet, definiert einen ersten Flankenbereich FL_{A}, der sich über den steilsten Bereich der Flanke A erstreckt. In gleicher Weise definiert der Bereich, in dem die erste Ableitung den oberen Schwellenwert O überschreitet, einen zweiten Flankenbereich FL_{B}, der sich über den steilsten Bereich der Flanke B erstreckt. In diesen Bereichen können Kennwerte ermittelt werden, die für eine Druckmarke 2 charakteristisch sind, und aus denen Rückschlüsse über die Qualität bzw. das Vorhandensein einer entsprechenden Druckmarke 2 geschlossen werden können. In der einfachsten Ausführungsform werden zur Abgrenzung der Druckmarke 2 die Wendepunkte WP_{A} und WP_{B} der beiden Flanken A, B durch Ermitteln des jeweiligen Nulldurchgangs N_{A} bzw. N_{B} der zweiten Ableitung S" ermittelt. Bei einer deutliche ausgeprägten Flanke A, B gibt es im Allgemeinen genau einen Wendepunkt WP_{A}, WP_{B} und daher auch nur genau einen Nulldurchgang N_{A}, N_{B} der zweiten Ableitung S". Da nur die Wendepunkte WP_{A}, WP_{B} innerhalb der Flankenbereiche FL_{A}, FL_{B} ermittelt werden, führen Nulldurchgänge, die abseits der Flanken A, B aufgrund von Signalwelligkeiten auftreten können, nicht zur fälschlichen Detektion einer Druckmarke.

Der Punkt, an dem die erste Ableitung S' den unteren Schwellenwert U erstmals unterschreitet, kann als Beginn des für die Druckmarke 2 charakteristischen Bereichs des Sensorsignals S angesehen werden und er wird im Zusammenhang mit der gegenständlichen Beschreibung als unterer Basispunkt BP_{A} bezeichnet. Als Ende des für die Druckmarke 2 charakteristischen Bereichs kann demgemäß der Basispunkt BP_{B} der zweiten Flanke B bezeichnet werden, der an der Stelle liegt, an der die erste Ableitung nach der positiven Wertspitze wieder unter den oberen Schwellenwert O absinkt.

In analoger Weise können die Kopfpunkte KP_{A} und KP_{B} ermittelt werden, wobei der erste Kopfpunkt KP_{A} das Ende der ersten Flanke A kennzeichnet, und der zweite Kopfpunkt KP_{B} den Beginn der zweiten Flanke B kennzeichnet. Zwischen dem ersten und dem zweiten Kopfpunkt KP_{A}, KP_{B} verläuft ein im Wesentlichen horizontaler Bereich H, der dem dunkleren Detektionsbereich im Inneren der Druckmarke 2 entspricht (d.h. dem "Boden" des trogförmigen Verlaufs des Sensorsignals im Bereich der Druckmarke 2). Aus der Differenz zwischen der Signalstärke m außerhalb einer Druckmarke 2 und der Signalstärke n im horizontalen Bereich H des Sensorsignals kann ein Wert für den Kontrast K der Druckmarke 2 ermittelt werden. Sollten die beiden Basispunkte BP_{A}, BP_{B} bzw. die beiden Kopfpunkte KP_{A} und KP_{B} unterschiedliche Werte aufweisen, können sie für die Berechnung des Kontrastwertes K jeweils gemittelt werden.

Bevor das Sensorsignal ausgewertet wird, kann es in vorteilhafter Weise digitalisiert werden, wobei die Länge der für die Digitalisierung verwendeten Zeitschritte vorzugsweise an die aktuelle Geschwindigkeit der Druckmarke 2 angepasst wird.

Die ermittelten Kennwerte können zur Bewertung der Qualität und der Symmetrie einer Druckmarkendetektion verwendet werden. Für jede detektierte Druckmarke 2 können beispielsweise ein Wert für die Basisqualität und ein Wert für die Symmetriequalität ermittelt werden.

Als "Basisqualität" wird ein Wert bezeichnet, der für die Differenz zwischen den beiden Basispunkten BP_{A} und BP_{B} charakteristisch ist. Zur Berechnung eines solchen Wertes werden die beiden Basispunkte ermittelt und deren Differenz in Bezug zum Kontrast K gesetzt. Eine schlechte Basisqualität kann entweder auf eine Störmarke oder eine Druckmarke 2 schlechter Qualität hinweisen, andererseits verschlechtert sich der Wert für die Basisqualität auch sehr schnell, wenn die Druckmarke 2 an den Rand des Messfensters ROI "wandert". Dies liegt daran, dass bei der Glättung von Signalen (sei es das Sensorsignal S, oder dessen Ableitungen S', S") Mittelwertfilter eingesetzt werden, die die geglätteten Werte für das Sensorsignal S auf Basis einer Vielzahl von aufeinanderfolgenden Messpunkten des digitalen Sensorsignals durchführen. Somit beruht der Wert des Sensorsignals in jedem Zeitschritt auf einer Vielzahl von Signalwerten des ungeglätteten Sensorsignals, die vor und nach dem entsprechenden Zeitschritt liegen. Wenn beispielsweise die Messauflösung (also die Schrittweite der Digitalisierung) 4 µm beträgt, die Länge einer Druckmarke 2 etwa 650 Schritten entspricht, und der Mittelwertfilter 25 Messpunkte vor und nach dem jeweiligen Zeitschritt berücksichtigt, dann ändert sich der Wert für die Basisqualität bereits dann, wenn der für die Mittelwertbildung berücksichtigte Bereich aus dem Messfenster ROI hinauswandert, da einige der für die Berechnung des geglätteten Wertes verwendeten Signalwerte "abgeschnitten" werden. Dies wirkt sich bereits auf den Verlauf des zur Auswertung verwendeten digitalisieren Sensorsignals aus, bevor der Rand der Druckmarke 2 selbst das Messfenster ROI verlässt. Der Bedienperson bleibt also nach der Erkennung eines sich verschlechternden Werts für die Basisqualität noch Zeit, um zu reagieren, bevor sich die geänderten Bedingungen tatsächlich auf die Produktqualität auswirken.

Als "Symmetriequalität" wird ein Wert für die Symmetrie der beiden gegenüberliegenden Flanken A, B (also den Bereichen, in denen sich die erste Ableitung S' des Sensorsignals S außerhalb des von den Schwellenwerten O, U definierten Bereichs befinden) eines für eine Druckmarke 2 charakteristischen Verlaufs eines Sensorsignals bezeichnet. Zur Ermittlung eines solchen Werts wird eine Flanke (z.B. Flanke A) "gespiegelt" über die andere Flanke (z.B. Flanke B) gelegt und deren Differenzsignal in Bezug zum Kontrast ermittelt. Die Symmetriequalität spiegelt dabei die Summe der Differenzen zwischen Flanke A bzw. B wieder. d.h. bei stark ausgeprägten Marken mit hoher Signalamplitude kommt es zu einem höheren Differenzsignal als bei "schwachen" Marken. Wenn man das berechnete Differenzsignal in Bezug zur Signalamplitude (Kontrast) setzt, entsteht ein genormtes Differenzsignal und damit ein Qualitätswert der unabhängig von der Signalstärke ist.

Ein Wert von Null weist auf eine perfekte Symmetrie mit übereinstimmenden Flankenformen hin. Die Symmetriequalität ist umso schlechter, je mehr sich der Wert von Null unterscheidet. Druckprobleme oder andere Signalstörungen zeigen sich häufig in einer Asymmetrie des Sensorsignals im Bereich der Druckmarkendetektion, sodass der Wert für die Symmetriequalität geeignet ist, diese Qualitäten zu überwachen. Zusätzlich kann der Wert zur Erkennung von Störmarken verwendet werden.

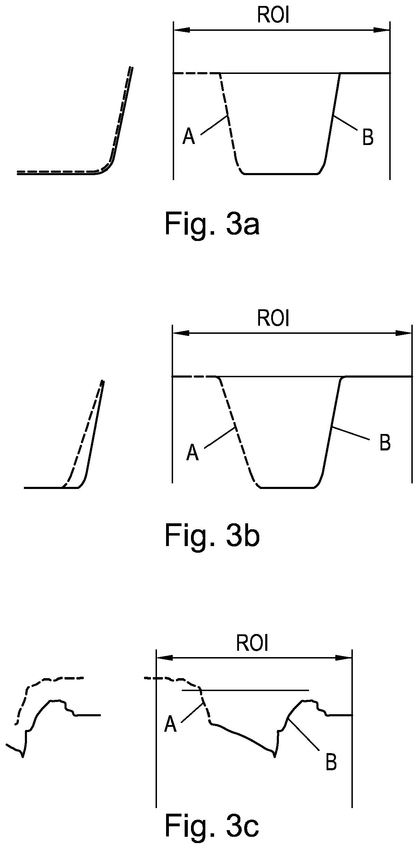

Fig. 3a bis 3c zeigen Signalverläufe von drei unterschiedlichen Sensorsignalen in einem Messfenster ROI, wobei jeweils die beiden Flanken A, B des für eine Druckmarke 2 charakteristischen Bereichs des Sensorsignals zur Überprüfung der Symmetrie links neben dem Sensorsignal nochmals gespiegelt übereinandergelegt dargestellt sind.

Fig. 3a zeigt ein Beispiel einer symmetrischen Signalverlaufs, bei dem beide Flanken A, B nahezu identisch übereinstimmen, was für eine hohe Qualität des Sensorsignals spricht und auch zu einem guten Wert für die Symmetriequalität führt.

In Fig. 3b ist ein Beispiel eines leicht asymmetrischen Signalverlaufs eines Sensorsignals im Bereich einer Druckmarke 2 dargestellt, wobei die beiden Flanken A, B nicht exakt Deckungsgleich sind. Die Symmetriequalität der detektierten Druckmarke 2 ist dementsprechend geringer als bei Fig. 3a.

Fig. 3c zeigt ein Beispiel eines von einer Störmarke hervorgerufenen Verlaufs eines Sensorsignals im Messbereich ROI. Die Flankenformen, als auch die Größen der beiden Flanken A, B unterscheiden sich erheblich. Die Symmetriequalität ist daher signifikant schlechter als in den Beispielen der Fig. 3a und 3b. Auch bestehen große Unterschiede hinsichtlich der Kennwerte (BP_{A}, WP_{A}, KP_{A}), die für die ersten Flanke A ermittelt werden, und der entsprechenden Kennwerte (BP_{B}, WP_{B}, KP_{A}), die für die zweiten Flanke B ermittelt werden.

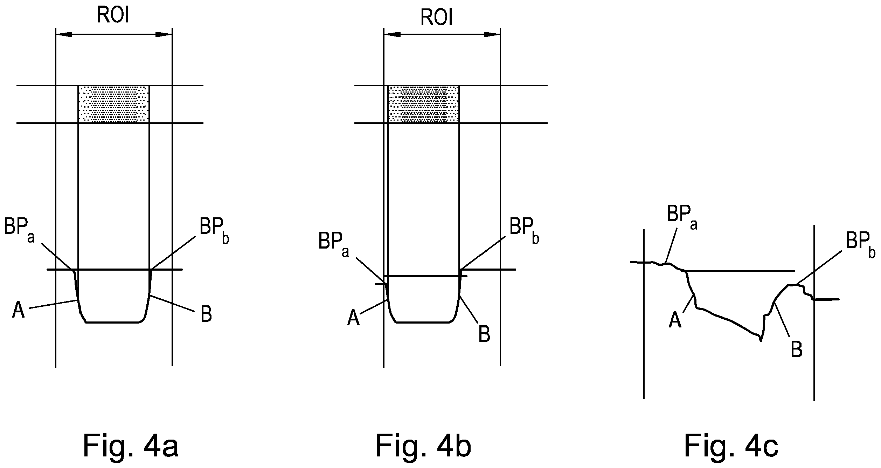

Die Fig. 4a-4c zeigen drei Beispiele für die Ermittlung einer Basisqualität für ein Sensorsignal S in einem Messfenster RPI, in dem eine Druckmarke 2 detektiert wurde. Zur Ermittlung der Basisqualität wird die Differenz zwischen den Basispunkte BP_{A} und BP_{B} beider Flanken A, B sowie der Kontrast K des Sensorsignals ermittelt. Dann wird der Quotient von Kontrast K zu dieser Differenz gebildet. Dadurch wird ein Qualitätswert erhalten, der die Hintergrundasymmetrie der Druckmarke 2 wiederspiegelt. Ein Wert von Null weist auf eine optimale Basisqualität hin, wobei in diesem Fall die Signalstärken der Basispunkte BP_{A} und BP_{B} übereinstimmen.

Fig. 4a zeigt eine symmetrische Marke, die im Messfenster (ROI) zentriert angeordnet ist. Beide Basispunkte BP_{A} und BP_{B} weisen im Wesentlichen dieselben Signalwerte auf. Da die Differenz zwischen den Signalwerten der Basispunkte BP_{A} und BP_{B} somit gering, bzw. nicht vorhanden ist, ergibt sich ein guter Wert für die Basisqualität.

Über die Basisqualität ist beispielsweise zu erkennen, ob sich die Druckmarke 2 aus dem Messfenster ROI bewegt. Falls sich eine der Markenflanken zu nahe am Rand des Messfensters befindet, sinkt dieser Qualitätswert. Ein solcher Fall ist in Fig. 4b dargestellt, in der die Druckmarke 2 an den Rand des Messfensters (ROI) gewandert ist, sodass sich die beiden Basispunkte BP_{A} und BP_{B} nicht auf der selben Höhe befinden. Für diesen Fall ergibt sich ein geringer Qualitätswert. Es ist darauf hinzuweisen, dass die Basisqualität des Sensorsignals in Fig. 4b sich bereits verschlechtert, wenn die Druckmarke 2 sich zwar nahe am Rand, aber immer noch vollständig innerhalb des Messfensters ROI befindet. Dies liegt daran, dass in der in Fig. 4b dargestellten Position einige Werte, die von dem für die Glättung vorgesehenen Mittelwertfilter für die Berechnung des Wertes des ersten Basispunkts BP_{A} berücksichtigt werden, außerhalb des Messfensters liegen. Diese fehlenden Werte "verfälschen" den Signalwert des Basispunkts BP_{A} im geglätteten Sensorsignal, sodass sich der Signalwert des Basispunkts BPₐ von dem Signalwert des Basispunkts BP_{b} unterscheidet, was zu einem schlechten Wert für die Basisqualität führt.

Fig. 4c zeigt das Beispiel des Signalverlaufs eines Sensorsignals S bei einer Störmarke. Die beiden Basispunkte BP_{A} und BP_{B} weisen sehr unterschiedliche Signalwerte auf. Entsprechend gering ist die Basisqualität der Marke. Dass neben der Basisqualität auch die Symmetriequalität dieses Sensorsignals (siehe Fig. 3c) sehr schlecht ist, ist ein starkes Indiz dafür, dass diesem Signalverlauf eine Störmarke zugrunde liegt.

In der Praxis können vom Benutzer die Vorgaben für das jeweilige Messfenster ROI definiert werden, um es auf die zu erwartende Position und Breite der Druckmarke 2 optimal abzustimmen. Je nach Anwendungsfall können vom Benutzer Strategien bzw. Methoden definiert werden, die bei einer Mehrfacherkennung die richtige Marke selektiert. Falls sich mehrere Druckmarken in einem Messfenster ROI befinden, werden zuerst alle Marken im aktuellen Messfenster detektiert und anschließend mithilfe der definierten Auswahlmethode die richtige Marke ausgewählt und bei der Detektion der Druckmarke berücksichtigt.

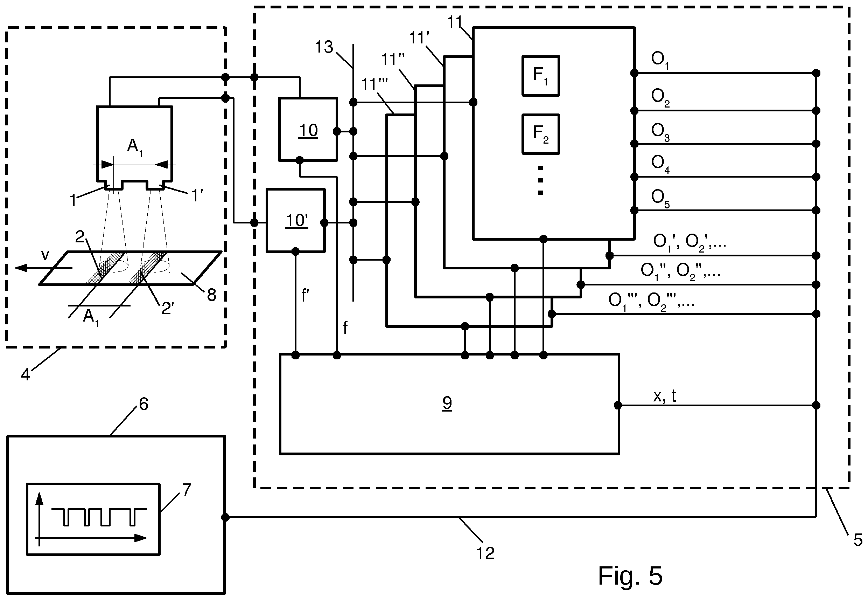

In Fig. 5 sind die wesentlichen Elemente einer erfindungsgemäßen Vorrichtung zur Detektion von Druckmarken schematisch dargestellt. Die Vorrichtung umfasst eine Sensoranordnung 4 und eine Signalaufbereitungseinheit 5. Die Signalaufbereitungseinheit 5 steht über ein Industrienetzwerk 12 in Verbindung mit einer Steuerungseinheit 6, die eine Benutzerschnittstelle 7 für eine Bedienperson bereitstellt. Die Sensoranordnung weist einen ersten und einen zweiten Kontrastsensor 1,1' auf, die direkt über dem Druckmaterial 8 angeordnet ist, sodass die auf dem Druckmaterial 8 vorhandenen Druckmarken 2, 2', die sich mit einer Relativgeschwindigkeit v unter den Kontrastsensoren 1,1' vorbei bewegen, von diesen detektiert werden können. Gegebenenfalls kann auch nur ein einziger Kontrastsensor 1 vorgesehen sein, wenn dies für die jeweilige Aufgabe ausreichend ist. Die beiden Kontrastsensoren 1,1' sind in einem bestimmten Abstand A₁ voneinander angeordnet, der dem gewünschten Abstand A₁ der Druckmarken auf dem Druckmaterial entspricht. Dadurch kann auf einfache Weise ein Differenzsignal gebildet werden, das der Abweichung der Druckmarkendistanz von dem Sollwert A₁ entspricht und zur Justierung der Maschine verwendet werden kann.

Die Signale des ersten Kontrastsensors 1 und des zweiten Kontrastsensors 1' werden an die Signalaufbereitungseinheit 5 übermittelt, die einen ersten Analog-Digital-Umsetzer 10 und einen zweiten Analog-Digital-Umsetzer 10' aufweist, in denen jeweils ein Signal eines der Kontrastsensoren in ein digitales Signal umgewandelt wird. Dabei werden die analogen Sensorsignale in mithilfe einer vorgegebenen Abtastrate f, f' in ein wegdiskretes digitales Sensorsignal umwandelt. Als "wegdiskretes digitales Sensorsignal" wird ein zeitdiskretes digitales Sensorsignal bezeichnet, dessen Zeitschritte so mit der Vorschubgeschwindigkeit der Druckmarken synchronisiert sind, dass jeder (variable) Zeitschritt einer konstanten Wegstrecke (die von der Druckmarke 2 zurückgelegt wird) entspricht.

Die Abtastrate wird von einer Recheneinheit 9 auf Basis eines Wegsignals x und eines Zeitsignals t ermittelt. Dadurch ergibt sich für das digitale Sensorsignal eine Messauflösung, die in einer Längeneinheit (in Richtung der Bewegungsrichtung der Druckmarke 2) angegeben werden kann. Die Messauflösung kann dabei je nach dem Anwendungsfall passend gewählt werden, beispielsweise in einem Bereich von etwa 2 bis etwa 100 µm, bevorzugt in einem Bereich zwischen etwa 3 und etwa 4 µm. Diese Messauflösung erlaubt es, einen optimalen Kompromiss zwischen den gewünschten hohen Verarbeitungsgeschwindigkeiten der Maschine und der von digitalen Filtern maximal verarbeitbaren Signaltaktung zu finden.

Die Signalaufbereitungseinheit 5 weist weiters eine Vielzahl an Filtereinheiten 11 auf, wobei im Fall der Fig. 5 vier Filtereinheiten 11, 11', 11" und 11''' dargestellt sind. Jede der Filtereinheiten 11 ist als eigene Hardwareeinheit unabhängig von den anderen Filtereinheiten konfigurierbar, wobei auf Basis eines digitalen Eingangssignals, z.B. dem vom ersten Analog-Digital-Umsetzer 10 ausgegebenen digitalen Sensorsignal des ersten Kontrastsensors 1 und/oder dem vom zweiten Analog-Digital-Umsetzer 10' ausgegebenen digitalen Sensorsignal des zweiten Kontrastsensors 1' gemäß den erfindungsgemäßen Verfahren eine Reihe von Ausgabewerte Oₓ, Oₓ', Oₓ", Oₓ''' ermittelt und über das Industrienetzwerk 12 an die Steuerungseinheit 6 oder an andere (nicht dargestellte) Vorrichtungen übermittelt werden können. Die vier Filtereinheiten 11, 11', 11" und 11''' stellen aus Hardwaresicht parallele Prozessoren dar, die jeweils eine (oder mehrere) Filterfunktion(en) gemäß einem bestimmten Filteralgorithmus ausführen. Die Konfiguration der Filtereinheiten 11, 11', 11" und 11''' kann über die zentrale Recheneinheit 9 vorgenommen werden.

Um die digitalisierten Sensorsignale von den Analog-Digital-Umsetzern 10 und 10' zu den einzelnen Filtereinheiten 11, 11', 11" und 11''' zu übermitteln, ist eine interne Kommunikationsverbindung 13 vorgesehen. Somit kann jede der Filtereinheiten 11, 11', 11" und 11''' gemäß der jeweiligen Konfiguration auf das entsprechend benötigte Sensorsignal zugreifen.

Die Funktion der Filtereinheiten 11, 11', 11" und 11''' wird nun anhand einer beispielhaften Konfiguration in Bezug auf die erste Filtereinheit 11 detailliert beschrieben. Die erste Filtereinheit 11 greift auf das vom ersten Analog-Digital-Umsetzer 10 digitalisierte Signal des ersten Kontrastsensors 1 zu. Für die erste Filtereinheit 10 ist ein Messfenster ROI definiert, sodass dieser Filter nur Signalwerte auswertet, die zwischen einer das Messfenster ROI begrenzenden ersten Grenzwert und einem zweiten Grenzwert liegen, wobei der erste und der zweite Grenzwert als Positionsangabe, beispielsweise in µm angegeben sein können. Die Angabe der Position der Druckmarke kann beispielsweise auf die Länge eines Maschinenteils bezogen sein, beispielsweise auf die Länge des Umfangs einer Druckwalze, angegeben in µm.

Die Filtereinheit 11 weist einen ersten Filter F₁ auf, der das Signal im Messfenster ROI glättet. Danach wird aus dem Signal in einem zweiten Filter F₂ eine erste Ableitung S' des Sensorsignals S gebildet und in einem dritten Filter F₃ wird die zweite Ableitung S" des Sensorsignals S gebildet. Diese Ableitungen werden in weiteren Filtern ausgewertet und es werden gemäß dem erfindungsgemäßen Verfahren Druckmarken detektiert und deren Position und Breite ermittelt. Weitere Filter können definiert sein, um den oberen Grenzwert O und den unteren Grenzwert U aus der ersten Ableitung dynamisch zu ermitteln, um einen Kontrastwert für eine detektierte Druckmarke zu ermitteln, und/oder um ein oder mehrere Qualitätswerte für die detektierte Druckmarke zu ermitteln.

Von der ersten Filtereinheit 11 werden aus dem Sensorsignal S des ersten Kontrastsensors 1 die folgenden Ausgabewerte errechnet und über das Industrienetzwerk 12 laufend ausgebeben :
- Ausgabewert O₁: Position der ersten Druckmarke 2 [µm]
- Ausgabewert O₂: Breite der ersten Druckmarke 2 [µm]
- Ausgabewert O₃: Kontrast der ersten Druckmarke 2 [ΔV]
- Ausgabewert O₄: Kombinierter Qualitätswert der ersten Druckmarke 2 [%]
- Ausgabewert O₅: Sensorsignal des ersten Kontrastsensors [V]

Der Kombinierte Qualitätswert ist ein gegebenenfalls gewichteter Mittelwert von Basisqualität und Symmetriequalität. Alle Auswertungen der ersten Filtereinheit 11 sind auf das Messfenster ROI begrenzt.

Um eine vollständige Auswertung der Sensorsignale S des ersten Kontrastsensors 1 und des zweiten Kontrastsensors 1' zu ermöglichen, wird die zweite Filtereinheit 11' analog zur ersten Filtereinheit 11 konfiguriert, jedoch zur Auswertung des Sensorsignals des zweiten Kontrastsensors 11'.

Von der zweiten Filtereinheit 11' werden somit die folgenden Ausgabewerte errechnet und über das Industrienetzwerk 12 ausgebeben:
- Ausgabewert O'₁: Position der zweiten Druckmarke 2' [µm]
- Ausgabewert O'₂: Breite der zweiten Druckmarke 2' [µm]
- Ausgabewert O'₃: Kontrast der zweiten Druckmarke 2' [ΔV]
- Ausgabewert O'₄: Kombinierter Qualitätswert der zweiten Druckmarke 2' [%]
- Ausgabewert O'₅: Sensorsignal des zweiten Kontrastsensors [V]

Die Auswertungen der zweiten Filtereinheit 11' sind auf das selbe Messfenster ROI beschränkt wie die der ersten Filtereinheit 11.

Die Ausgabewerte der ersten und der zweiten Filtereinheit 11, 11' können von der Steuerungseinheit 6 oder gegebenenfalls von anderen Regelungsvorrichtung zur Maschinensteuerung verwendet werden. Weiters kann die Steuerungseinheit 6 die Sensorsignale im ausgewählten Messfenster ROI, sowie einen Verlauf der Qualitätswerte an der Benutzerschnittstelle 7 übersichtlich darstellen.

Die dritte und vierte Filtereinheit 11", 11''' können analog zur ersten und zur zweiten Filtereinheit 11, 11' konfiguriert werden, jedoch ohne durch ein Messfenster ROI beschränkt zu sein, wobei die das jeweilige Sensorsignal über den gesamten Bereich des zyklischen Signals auswerten. Auch dieser Verlauf kann von der Steuerungseinheit 6 an der Benutzerschnittstelle 7 dargestellt werden, um einer Bedienperson beispielsweise eine Auswahl eines neuen Messfensters ROI schnell und übersichtlich zu ermöglichen.

Die oben beschriebene spezifische Konfiguration der vier dargestellten Filtereinheiten 11, 11', 11" und 11''' sind rein beispielhaft und können flexibel an die jeweiligen Bedürfnisse angepasst werden.

Die Steuerungseinheit 6 kann die Ausgabewerte beispielsweise verwendet, um die Darstellung der Benutzerschnittstelle 7 zu aktualisieren, oder um Warnhinweise zu erstellen, etwa wenn die Qualitätswerte sich ändern bzw. einen zulässigen Bereich verlassen. Gegebenenfalls können auch weitere Ausgabewerte für einen oder mehrere der Filtereinheiten 11 definiert sein.

## Patentansprüche

1. Verfahren zur Detektion von Druckmarken durch Auswertung eines zyklischen Sensorsignals (S) von zumindest einem Kontrastsensor, der den die Druckmarke enthaltenden Bereich von Druckmaterial, das unter dem Kontrastsensor hindurchgeführt wird, abtastet, **dadurch gekennzeichnet, dass** das Verfahren die folgenden Schritte aufweist:
- Bilden einer ersten Ableitung (S') des Sensorsignals (S);
- Ermitteln eines ersten Flankenbereichs (FL_{A}) in einem Bereich, wo die erste Ableitung (S') einen unteren Schwellenwert (U) unterschreitet;
- Ermitteln eines zweiten Flankenbereichs (FL_{B}) in einem Bereich, wo die erste Ableitung (S') einen oberen Schwellenwert (O) überschreitet;
- Ermitteln von Kennwerten für den ersten Flankenbereich (FL_{A}) und den zweiten Flankenbereich (FL_{B});
- Zuordnen einer Druckmarkendetektion zwischen dem ersten Flankenbereich (FL_{A}) und dem zweiten Flankenbereich (FL_{B}) auf Basis von ermittelten Kennwerten; und
- Erzeugen von zumindest einem für die Druckmarken repräsentativen Ausgabewert (Oₓ) auf Basis der Druckmarkendetektion.

2. Verfahren nach Anspruch 1, **dadurch gekennzeichnet, dass** der untere Schwellenwert (U) und/oder der obere Schwellenwert (O) dynamische Schwellenwerte sind, die auf Basis der ersten Ableitung (S') ermittelt werden.

3. Verfahren nach Anspruch 1 oder 2, **dadurch gekennzeichnet, dass** das Verfahren weiters die folgenden Schritte aufweist:
- Bilden einer zweiten Ableitung (S") des Sensorsignals (S);
- Ermitteln des Nulldurchgangs (N_{A}) der zweiten Ableitung (S") des Sensorsignals (S) im ersten Flankenbereich (FL_{A});
- Ermitteln des Nulldurchgangs (N_{B}) der zweiten Ableitung (S") des Sensorsignals (S) im zweiten Flankenbereich (FL_{B});
- Zuordnen einer Druckmarkendetektion zwischen dem ersten Nulldurchgang (N_{A}) und dem zweiten Nulldurchgang (N_{B}).

4. Verfahren nach einem der Ansprüche 1 bis 3, **dadurch gekennzeichnet, dass** der zumindest eine für die Druckmarken repräsentative Ausgabewert (Oₓ) ausgewählt ist aus einer Druckmarkenposition (O₁), einer Druckmarkenbreite (O₂), einem Druckmarken-Kontrastwert (O₃), und/oder einem Qualitätswert (O₄), insbesondere einem Wert für die Basisqualität und/oder einem Wert für die Symmetriequalität und/oder einem kombinierten Qualitätswert.

5. Verfahren nach einem der Ansprüche 1 bis 4, **dadurch gekennzeichnet, dass** die Auswertung des zyklischen Sensorsignals (S) in einem, gegebenenfalls von einem Benutzer definierbaren, Messfenster (ROI) erfolgt.

6. Verfahren nach Anspruch 5, **dadurch gekennzeichnet, dass** das Messfenster (ROI) durch Auswertung von zumindest einem ersten Zyklus des zyklischen Sensorsignals ermittelt wird.

7. Verfahren nach einem der Ansprüche 5 oder 6, **dadurch gekennzeichnet, dass** die Größe und/oder Position des Messfensters (ROI) automatisch an ein detektiertes Druckmarkensignal angepasst wird.

8. Verfahren nach einem der Ansprüche 1 bis 7, **dadurch gekennzeichnet, dass** die für eine Digitalisierung des Sensorsignals (S) verwendete Abtastrate (f, f') mit der Geschwindigkeit (v) des Druckmaterials synchronisiert wird.

9. Verfahren nach einem der Ansprüche 1 bis 8, **dadurch gekennzeichnet, dass** die Messauflösung in einem Bereich zwischen 2 und 100 µm, vorzugsweise in einem Bereich von etwa 3 - 4 µm liegt.

10. Verfahren nach einem der Ansprüche 1 bis 9, **dadurch gekennzeichnet, dass** ein Differenzwert zwischen einem aus dem Sensorsignal eines ersten Kontrastsensors (1) ermittelten, für eine erste Druckmarke (2) repräsentativen Ausgabewert (Oₓ) und einem aus dem Sensorsignal eines zweiten Kontrastsensors (1') ermittelten, für eine zweite Druckmarke (2') repräsentativen Ausgabewert (O'ₓ) gebildet wird.

11. Vorrichtung zur Detektion von Druckmarken (2, 2') mit einer Sensoranordnung (4) und einer Signalaufbereitungseinheit (5), wobei die Sensoranordnung (4) zumindest einen Kontrastsensor (1, 1') aufweist, der zur Erzeugung eines zyklischen Sensorsignals (S) über dem die Druckmarke (2) enthaltenden Bereich von Druckmaterial (8), das unter dem Kontrastsensor (1, 1') hindurchgeführt wird, angeordnet ist, **dadurch gekennzeichnet, dass** die Signalaufbereitungseinheit (5) zumindest eine Filtereinheit (11) mit einem ersten Filter (F₁) zur Ermittlung der ersten Ableitung (S') des Sensorsignals (S) aufweist, wobei die Filtereinheit (11) auf Basis einer Auswertung von zumindest der ersten Ableitung (S') des Sensorsignals (S) zumindest einen für Druckmarken (2, 2') repräsentativen Ausgabewert (Oₓ) unter Umsetzung eines Verfahrens gemäß einer der Ansprüche 1-10 erzeugt.

12. Vorrichtung nach Anspruch 11, **dadurch gekennzeichnet, dass** die Filtereinheit (11) weiters einen zweiten Filter (F₂) zur Ermittlung der zweiten Ableitung (S") des Sensorsignals (S) aufweist, wobei die Filtereinheit (11) auf Basis einer Auswertung der ersten und zweiten Ableitungen (S', S") des Sensorsignals (S) den für Druckmarken (2, 2') repräsentativen Ausgabewert (Oₓ) unter Umsetzung eines Verfahrens gemäß einer der Ansprüche 3-10 erzeugt.

13. Vorrichtung nach Anspruch 11 oder 12, **dadurch gekennzeichnet, dass** die Signalaufbereitungseinheit (5) eine zentrale Recheneinheit (9) aufweist, die eine auf die Geschwindigkeit (v) des Druckmaterials (8) abgestimmte Abtastrate (f, f') ermittelt und diese Abtastrate (f, f') einem Analog-Digital-Umsetzer (10, 10') für das Sensorsignal (S) vorgibt.

14. Vorrichtung nach Anspruch 13, **dadurch gekennzeichnet, dass** die von der Filtereinheit (11) verwendeten Filter (F₁, F₂) 1D-Filter sind.

15. Vorrichtung nach einem der Ansprüche 11 bis 14, **dadurch gekennzeichnet, dass** die Sensoranordnung (4) zwei in Vorschubrichtung des Druckmaterials (8) hintereinander angeordnete Kontrastsensoren (1, 1') aufweist.

16. Vorrichtung nach einem der Ansprüche 11 bis 15, **dadurch gekennzeichnet, dass** der von der Filtereinheit (11) ausgewertete Bereich des zyklischen Sensorsignals (S) auf ein Messfenster (ROI) begrenzbar ist.

17. Vorrichtung nach einem der Ansprüche 11 bis 16, **dadurch gekennzeichnet, dass** die Vorrichtung eine Vielzahl an gleichartigen Filtereinheiten (11, 11', 11", 11''') aufweist.

## Claims

1. Method for detection of print marks by evaluation of a cyclical sensor signal (S) from at least one contrast sensor which senses the area of printed material containing the print mark which is passed below the contrast sensor, **characterized in that** the method includes the following steps:
- forming a first derivation (S') of the sensor signal (S);
- determining a first edge region (FL_{A}) in a region where the first derivation (S') falls below a lower threshold value (U);
- determining a second edge region (FL_{B}) in a region where the first derivation (S') exceeds an upper threshold value (O);
- determining characteristic values for the first edge region (FL_{A}) and the second edge region (FL_{B});
- associating a print mark detection between the first edge region (FL_{A}) and the second edge region (FL_{B}) on the basis of determined characteristic values; and
- generating at least one output value (Oₓ) which is representative of the print marks on the basis of the print mark detection.

2. Method according to claim 1, **characterized in that** the lower threshold value (U) and/or the upper threshold value (O) are dynamic threshold values which are determined on the basis of the first derivation (S').

3. Method according to claim 1 or 2, **characterized in that** the method further comprises the following steps:
- forming a second derivation (S") of the sensor signal (S);
- determining the zero crossing (N_{A}) of the second derivation (S") of the sensor signal (S) in the first edge region (FL_{A});
- determining the zero crossing (N_{B}) of the second derivation (S") of the sensor signal (S) in the second edge region (FL_{B});
- associating a print mark detection between the first zero crossing (N_{B}) and the second zero crossing (N_{B}).

4. Method according to any one of claims 1 to 3, **characterized in that** the at least one output value (Oₓ) which is representative of the print mark can be selected from a print mark position (O₁), a print mark width (O₂), a print mark contrast value (O₃), and/or a quality value (O₄), in particular a value for the base quality and/or a value for the symmetry quality and/or a combined quality value.

5. Method according to one of claims 1 to 4, **characterized in that** the evaluation of the cyclical sensor signal (S) takes place in a measuring window (ROI) which if required may be defined by a user.

6. Method according to claim 5, **characterized in that** the measuring window (ROI) is determined by evaluation of at least one first cycle of the cyclical sensor signal.

7. Method according to one of claims 5 or 6, **characterized in that** the size and/or position of the measuring window (ROI) is automatically adapted to a detected print mark signal.

8. Method according to one of claims 1 to 7, **characterized in that** the sampling rate (f, f') used for digitization of the sensor signal (S) is synchronized with the speed (v) of the printed materials.

9. Method according to one of claims 1 to 8, **characterized in that** the measurement resolution is in a range between 2 and 100 µm, preferably in a range from approximately 3 to 4 µm.

10. Method according to one of claims 1 to 9, **characterized in that** a difference value can be formed between an output value (Oₓ) which is determined from the sensor signal from a first contrast sensor (1) and is representative of a first print mark (2) and an output value (O'ₓ) which is determined from the sensor signal from a second contrast sensor (1') and is representative of a second print mark (2').

11. Apparatus for the detection of print marks (2, 2') with a sensor arrangement (4) and a signal conditioning unit (5), wherein the sensor arrangement (4) has at least one contrast sensor (1, 1') which for generation of a cyclical sensor signal (S) is disposed above the area of printed material (8) containing the print mark (2) which is passed below the contrast sensor (1, 1'), **characterized in that** the signal conditioning unit (5) has at least one filter unit (11) with a first filter (F₁) for determination of the first derivation (S') of the sensor signal (S), wherein on the basis of an evaluation of at least the first derivation (S') of the sensor signal (S) the filter unit (11) generates at least one output value (Oₓ) which is representative of print marks (2, 2'), implementing a method according to any of the claims 1 to 10.

12. Apparatus according to claim 11, **characterized in that** the filter unit (11) also has a second filter (F₂) for determination of the second derivation (S") of the sensor signal (S), wherein on the basis of an evaluation of the first and second derivations (S', S") of the sensor signal (S) the filter unit (11) generates the output value (Oₓ) which is representative of the print marks (2, 2'), implementing a method according to any of the claims 3 to 10.

13. Apparatus according to claim 11 or 12, **characterized in that** the signal conditioning unit (5) has a central computer unit (9) which determines a sampling rate (f, f') coordinated with the speed (v) of the printed material (8) and passes on this sampling rate (f, f') to an analogue-digital converter (10, 10') for the sensor signal (S).

14. Apparatus according to claim 13, **characterized in that** the filters (F₁, F₂) used by the filter unit (11) are 1D filters.

15. Apparatus according to one of claims 11 to 14, **characterized in that** the sensor arrangement (4) has two contrast sensors (1, 1') disposed one behind the other in the feed direction of the printed material (8).

16. Apparatus according to one of claims 11 to 15, **characterized in that** the region of the cyclical sensor signal (S) evaluated by the filter unit (11) can be limited to one measuring window (ROI).

17. Apparatus according to one of claims 11 to 16, **characterized in that** the apparatus has a plurality of similar filter units (11, 11', 11", 11''').

## Revendications

1. Procédé de détection de marques d'impression par évaluation d'un signal de capteur cyclique (S) provenant d'au moins un capteur de contraste qui balaye la zone, contenant la marque d'impression, de matière d'impression que l'on fait passer sous le capteur de contraste, **caractérisé en ce que** le procédé comprend les étapes suivantes :
- former une dérivée première (S') du signal de capteur (S) ;
- déterminer une première zone de bord (FL_{A}) dans une zone où la dérivée première (S') devient inférieure à une valeur de seuil inférieure (U) ;
- déterminer une deuxième zone de bord (FL_{B}) dans une zone où la dérivée première (S') devient supérieure à une valeur de seuil supérieure (O) ;
- déterminer des valeurs caractéristiques pour la première zone de bord (FL_{A}) et la deuxième zone de bord (FL_{B}) ;
- associer une détection de marque d'impression entre la première zone de bord (FL_{A}) et la deuxième zone de bord (FL_{B}) sur la base de valeurs caractéristiques déterminées ; et
- générer au moins une valeur de sortie (Oₓ), représentative des marques d'impression, sur la base de la détection de marques d'impression.

2. Procédé selon la revendication 1, **caractérisé en ce que** la valeur de seuil inférieure (U) et/ou la valeur de seuil supérieure (O) sont des valeurs de seuil dynamiques qui sont déterminées sur la base de la dérivée première (S').

3. Procédé selon la revendication 1 ou 2, **caractérisé en ce que** le procédé comprend en outre les étapes suivantes :
- former une dérivée seconde (S") du signal de capteur (S) ;
- déterminer le passage par zéro (N_{A}) de la dérivée seconde (S") du signal de capteur (S) dans la première zone de bord (FL_{A}) ;
- déterminer le passage par zéro (N_{B}) de la dérivée seconde (S") du signal de capteur (S) dans la deuxième zone de bord (FL_{B}) ;
- associer une détection de marque d'impression entre le premier passage par zéro (N_{A}) et le deuxième passage par zéro (N_{B}).

4. Procédé selon l'une des revendications 1 à 3, **caractérisé en ce qu'**au moins une valeur de sortie (Oₓ), représentative des marques d'impression, est sélectionnée parmi une position de marque d'impression (O₁), une largeur de marque d'impression (O₂), une valeur de contraste de marque d'impression (O₃) et/ou une valeur de qualité (O₄), en particulier une valeur de la qualité de base et/ou une valeur de la qualité de symétrie et/ou une valeur de qualité combinée.

5. Procédé selon l'une des revendications 1 à 4, **caractérisé en ce que** l'évaluation du signal de capteur cyclique (S) est effectuée dans une fenêtre de mesure (ROI) qui peut être définie par un utilisateur.

6. Procédé selon la revendication 5, **caractérisé en ce que** la fenêtre de mesure (ROI) est déterminée par l'évaluation d'au moins un premier cycle du signal de capteur cyclique.

7. Procédé selon l'une des revendications 5 ou 6, **caractérisé en ce que** la dimension et/ou la position de la fenêtre de mesure (ROI) sont adaptées automatiquement à un signal de marque d'impression détectée.

8. Procédé selon l'une des revendications 1 à 7, **caractérisé en ce que** la vitesse de balayage (f, f') utilisée pour numériser le signal de capteur (S) est synchronisée avec la vitesse (v) de la matière d'impression.

9. Procédé selon l'une des revendications 1 à 8, **caractérisé en ce que** la résolution de mesure est dans une gamme comprise entre 2 et 100 µm, de préférence dans une gamme de 3 à 4 µm environ.

10. Procédé selon l'une des revendications 1 à 9, **caractérisé en ce que** l'on forme une valeur de différence entre une valeur de sortie (Oₓ) représentative d'une première marque d'impression (2) et déterminée à partir du signal d'un premier capteur de contraste (1) et une valeur de sortie (O'ₓ) représentative d'une deuxième marque d'impression (2') et déterminée à partir du signal d'un deuxième capteur de contraste (1).

11. Dispositif de détection de marques d'impression (2, 2') comprenant un ensemble de capteurs (4) et une unité de traitement de signal (5), l'ensemble de capteurs (4) comportant au moins un capteur de contraste (1, 1') qui est disposé pour générer un signal de capteur cyclique (S) au-dessus de la zone, contenant la marque d'impression (2), de matière d'impression (8) que l'on fait passer sous le capteur de contraste (1, 1), **caractérisé en ce que** l'unité de traitement de signal (5) comprend au moins une unité de filtrage (11) pourvue d'un premier filtre (F₁) destiné à déterminer la dérivée première (S') du signal de capteur (S), l'unité de filtrage (11) générant au moins une valeur de sortie (Oₓ), représentative de marques d'impression (2, 2'), sur la base d'une évaluation d'au moins la dérivé première (S') du signal de capteur (S) par mise en oeuvre d'un procédé selon l'une quelconque des revendications 1 à 10.

12. Dispositif selon la revendication 11, **caractérisé en ce que** l'unité de filtrage (11) comprend en outre un deuxième filtre (F₂) destiné à déterminer la dérivée seconde (S") du signal de capteur (S), l'unité de filtrage (11) générant la valeur de sortie (Oₓ), représentative des marques d'impression (2, 2'), sur la base d'une évaluation des dérivées première et seconde (S', S") du signal de capteur (S) par mise en oeuvre d'un procédé selon l'une des revendications 3 à 10.

13. Dispositif selon la revendication 11 ou 12, **caractérisé en ce que** l'unité de traitement de signal (5) comprend une unité centrale de traitement (9) qui détermine une vitesse de balayage (f, f') adaptée à la vitesse (v) de la matière d'impression (8) et prescrit cette fréquence de balayage (f, f') à un convertisseur analogique-numérique (10, 10') pour le signal de capteur (S).

14. Dispositif selon la revendication 13, **caractérisé en ce que** les filtres (F₁, F₂), utilisés par l'unité de filtrage (11), sont des filtres 1D.

15. Dispositif selon l'une des revendications 11 à 14, **caractérisé en ce que** l'ensemble de capteurs (4) comporte deux capteurs de contraste (1, 1') disposés l'un derrière l'autre dans le sens d'avancement de la matière d'impression (8).

16. Dispositif selon l'une des revendications 11 à 15, **caractérisé en ce que** la zone du signal de capteur cyclique (S), évaluée par l'unité de filtrage (11), peut être limitée à une fenêtre de mesure (ROI).

17. Dispositif selon l'une des revendications 11 à 16, **caractérisé en ce que** le dispositif comporte une pluralité d'unités de filtrage (11, 11', 11", 11''') de même type.
